# EUROPEAN PATENT APPLICATION

(11) **EP 2 735 789 A2**
(43) Date of publication of application: **28.05.2014**
(21) Application number: 13194437.3
(22) Date of filing: 26.11.2013
(51) Int. Cl.: F21V 5/08, F21V 8/00, F21Y 101/02

(54) **Lens arrangement with light guide and internal reflecting elements**

(30) Priority: 26.11.2012 DK 201200748
(71) Applicant: Bang & Olufsen A/S, 7600 Struer (DK)
(72) Inventor: Ejlersen, Finn, 7500 Holstebro (DK)
(74) Representative: Tellefsen, Jens J.

(57) **Abstract**

The invention discloses a lens arrangement with a curved light guide comprising a great number, e.g. one hundred, of internal lens holes reflecting the light from a small number of LEDs. The display device comprising the lens arrangement gives the illusion of having a great number of LEDs. The lens arrangement as disclosed is suitable for mass production applying simple injection molding and laser cutting technologies, thus the light guide as produced is cheap and applicable in a plurality of application domains.

## Description

### Field of the Invention

The present invention relates to display device configured with a plurality of lens arrangements and a light source.

### Background of the Invention

Light emitting diodes (LEDs) are applied in many different application domains, this being professional electronics or consumer electronics, and are used in display devices of any kind. The advantages of the LEDs are primarily that they require low power and may possess small physical dimensions.

The back side is primarily cost, which for display panels including a big number of LEDs may be problematic for the end-user price of a product.

The invention discloses a display device where a great number, e.g. one hundred, of lens devices gives the illusion of a device including the same number of LEDs, e.g. one hundred; this when the device is active. The device is driven with very few active LEDs, e.g. two, such that a potential heat problem is isolated within a very limited and specific area of the device.

The lens arrangement as disclosed is suitable for mass production applying simple injection molding and laser cutting technologies, thus the light guide and display device as produced is cheap and applicable in a plurality of application domains.

In addition it is very simple to handmade prototypes which simplifies and shortenings the development phase and minimizes the related costs.

Thus, a first aspect of the invention is:

A compact lens arrangement providing a plurality of lens elements configured to deliver enlightened points at a plurality of individual points appearing on a user interface, the lens arrangement characterized by:
- a light guide element configured with a compartment that includes a light source,
- a light guide element configured to include the plurality of lens elements organized consecutively in order in a row and each lens element being a Crescent formed hole,
- the plurality of the lens elements are configured to direct the light from the light source primarily to a surface of the light guide element that is visible for a user.

### Object of the Invention

The object of the invention is to disclose a display device that is compact in size, has high industrial design quality, delivers interesting light display features and with low power consumption due to a limited number of light sources.

### Description of the Invention

A light guide is configured with a plurality of holes ordered to having the capability to reflect light and to let light pass partly or fully according to the requirements of a specific display devices. The individual holes are shaped in form and in size and aligned accordingly.

In a preferred embodiment a number of consecutive ordered Crescent holes are formed in the light guide. From the outside, which is the surface of the device and oriented towards the user, the light guide appears as a number of small LEDs, thus it is an illusion of the real stuff being physical LEDs.

The further away from the light source, e.g. an LED, the lower light intensity; in order to compensate for this the holes are made smaller and smaller, so the number of holes per mm. is increasing.

By adjusting the size of the holes and the distance between the holes a uniform irradiance can be obtained.

Thus, another aspect of the invention is:
- The number of the consecutively ordered Crescent holes per mm is increased as a function of the distance from the light source to an actual hole, and where the size of the Crescent holes is decreased as a function of the distance from the light source to an actual hole.
- The spacing between two consecutive neighbor Crescent holes constitutes the enlightened points, appearing on a user interface, when the light source is active.

In a preferred embodiment the light source is a one or more LEDs. According to an actual requirement for the shape form of the light guide, a pair of LEDs may be applicable. In the given example two LEDs are applied. This is primarily caused by the physical nature of one LED, where the light emitted typically is from one side of the LED. To generate sufficient emitted light in the light guide two LEDs may be required and being opposite oriented with one LED emitting light in one direction and another LED emitting light in another direction.

Thus, yet another aspect of the invention is:
- The light source is one or more or a pair of LEDs.
- The light rays from one or more of the pair of LEDs is/are directed in a first direction and where the light rays from one or more of the pair of LEDs is/are directed in a second direction different from the first direction.

The light emitted from the one or more LEDs is transmitted through the light guide. When the light hits the Crescent holes on the surface configured with a flat side, the ray is internally reflected and thus distributed forward in the light guide. Primarily the ray hitting the gap between holes are deflected out of the light guide, and emulate a mode of enlighten, where the gaps appear as a physical LED.

Depending of the shape of the holes some light may pass through these having partly the effect of a diffuser placed in front of the lens hole. In this configuration the light emitted from the gap appears to be stronger than the light emitted through the holes.

Thus, a further aspect of the invention is:
- The spacing between two consecutive neighbor Crescent holes constitutes the enlightened points, appearing on a user interface, when the light source is active.
- The light rays are reflected partly by the edge of the light guide and partly at the edge and surface of the Crescent holes, and partly by the inner surface of the light guide.

The invention as disclosed is very applicable in many different types of electronic equipment where an enlighten feature is needed; this being par example, but not limited to: furniture, consumer goods like TV's, multi/media devices, audio equipment, loudspeakers, white goods and PC's, and further in rooms, compartments, ceilings, floors, walls, vehicles, cars boats and airplanes.

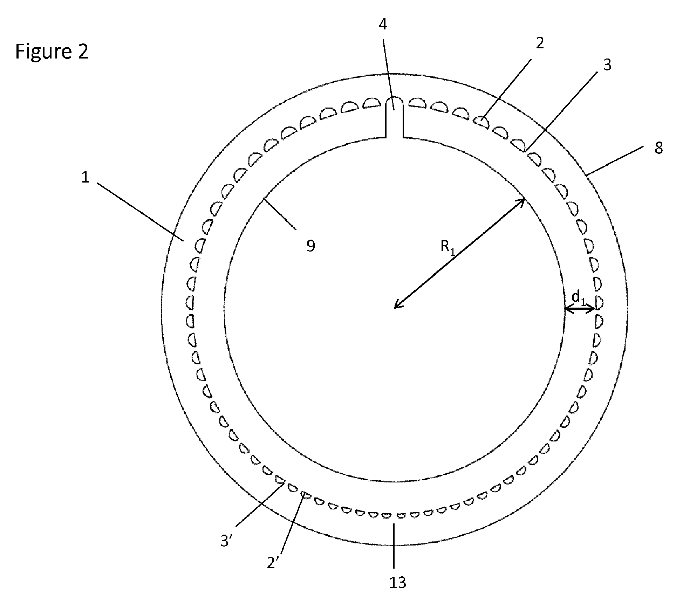

In a preferred embodiment the circular light guide is configured with the lens arrangement. Alternative geometrical forms may be an enclosure of the light guide, this being, but no limited to: a parable, an elliptic shape. The contour of curved light guide may fully or partly be included into curved shape in which R1 is bigger than d1, such that typically R1 is 3-5 times bigger that d1, ref. Figure 2.

A light guide including the lens arrangement may be built into specific apparatus, these having support means for an integrated solution, alternatively a standalone display device may include:
- A top plate and a bottom plate and with the lens arrangement in between the top plate and the bottom plate.
- One of or both of the top or the bottom plates are configured with light reflective means, and where one of -, or both of the top or the bottom plates are configured with electrical means.
- One of, or both of the top or the bottom plates are configured with mechanical support means.

The light guide as described may be mounted into specific apparatus applying standard means like glue, clips or alike. The power supply to the one or more LEDs is via standard low power supply means, the electronics being mounted directly onto a PCB or cabled to a subsystem within the apparatus.

### Description of the Drawing

Figure 1 displays a preferred embodiment of the invention.
Figure 2 displays a top view of the preferred embodiment.
Figure 3 displays details of the preferred invention.

### Detailed Description of the Invention

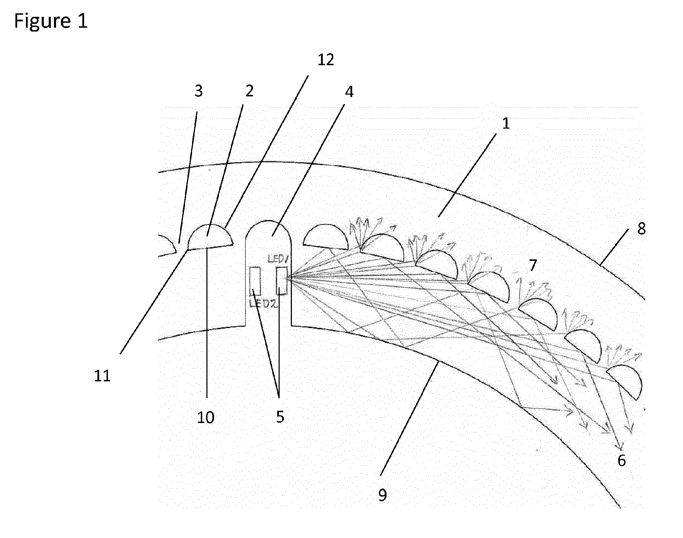

In figure 1 and 2 a preferred embodiment of the invention is illustrated. Pluralities of lens holes (2) are implemented in a circular shaped light guide (1). The holes are ordered in line along the curve form given by the geometrical shape of the light guide. The spacing (3) between the holes (2) constitutes the illuminated part that seen from the surface (8) of the light guide displays like an active LED, when the light source (5) is active. This light source being mounted into a cavity/compartment (4), cut into the light guide (1).

In the preferred embodiment the light source is a pair of LEDs (5), where one (LED1) is emitting light into the light guide in one direction (clockwise), and another (LED2) is emitting light into the light guide in another direction (counter clockwise).

Internally in the light guide the light beams are reflected according to the shape of the guide. As illustrated, three different reflective aspects are relevant:
- reflected by the inner surface (9) of the light guide,
- reflected by the plane surface (10) of the lens hole,
- reflected by the edge (11) of the lens hole,

Thus, the light "out from the device" as perceived by the user, on the surface of the device (8), is:
- primarily the light reflected from the edge of the lens hole (7),
- and partly a minor light reflection caused by internal reflection resulting in emission via the shaped surface of the lens hole (12).

In a preferred embodiment with a circular light guide typically physical dimensions are:
- the radius R1 is approx. 40mm,
- the radius R1 must be at least five times bigger than the distance (d1) from the plane surface of the lens hole to the inner surface of the light guide,
- the width of the plane surface of a lens hole is approx. 4mm, at the position closest to the light source,
- the width of the plane surface of a lens hole is approx. 2mm, at the position most away from the light source,
- the distance from one lens hole to the next lens hole is approx. 0,8mm, at the position closest to the light source,
- the distance from one lens hole to the next lens hole is approx. 1mm, at the position most away from the light source.

As illustrated in figure 2, the circular light guide (1) has the lens holes in different sizes and spacing between two consecutive holes. As mentioned, this is to accommodate for the varying light intensity of the beams close to the light source (4) or far away from the light source (13).

The example illustrates the lens size (2) and spacing (3) in one position close to the light source, and another lens size (2') and spacing (3') in another position away from the light source.

The preferred embodiment is as disclosed a circular light guide. The invention as disclosed may be applied in other geometrical forms, this being rectangle, ellipse, parable etc. The important aspect is that the lens hole must reflect the light beams, not through the lens hole itself, but guide it to the space between consecutive holes.

The preferred embodiment discloses a lens hole with a crescent-shaped form. Alternative forms may be applied as well. The important aspect is that the lens hole must have a plane surface (10) and the edge (11), whereas the curved upper part may possess alternative geometrical forms, suitable for actual process requirements.

In applications having requirements for a more diffuse light emitted from the device a specific diffuser may be mounted on front (8) of the light guide (1). The type of the diffuser may be a simple foil, tape or folio adapted/glued onto the surface (8) of the light guide.

In an alternative embodiment the light guide may be adapted with a diffuser in terms of a plurality of holes arranged at the inner side of outer periphery (8), i.e. inside the light guide (1), these holes being parallel with the lens holes of the light guide in the vertical plane. The number of these "diffuser holes" is dependent of the degree of diffuser effect required, but typically there must at least two diffuser holes per lens hole; one per each space between two lens holes.

The light guide may be made of some transparent material, like PVC, acryl, and glass or alike. In a preferred embodiment the material is transparent plastic, shaped in a molding process with following laser cutting -, or pressing process to implement the lens holes.

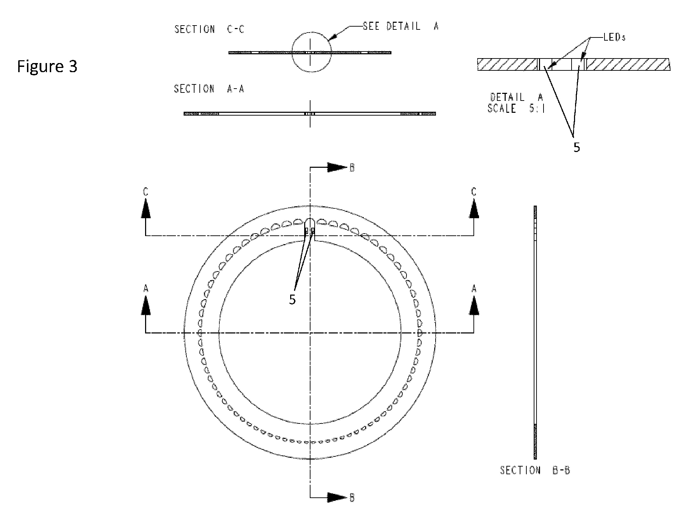

As illustrated in figure 3 the disclosed invention is a very flat and compact design. Three different cuts (A, B and C) are displayed, and it is seen, how the variable sizing of - and spacing among lens holes are distributed relative to the light source position (5).

## Claims

1. A compact lens arrangement providing a plurality of lens elements configured to deliver enlightened points at a plurality of individual points appearing on a user interface, the lens arrangement **characterized by**:
a. a light guide element configured with a compartment that includes a light source,
b. a light guide element configured to include the plurality of lens elements organized consecutively in order in a row and each lens element being a crescent-formed hole,
c. the plurality of the lens elements are configured to direct the light from the light source primarily to a surface of the light guide element that is visible for a user.

2. A compact lens arrangement according to claim 1, where the number of the consecutively ordered crescent holes per mm is increased as a function of the distance from the light source to an actual hole, and where the size of the crescent holes is decreased as a function of the distance from the light source to an actual hole.

3. A compact lens arrangement according to claim 2, where the spacing between two consecutive neighbour crescent holes constitutes the enlightened points, appearing on a user interface, when the light source is active.

4. A compact lens arrangement according to claim 3, where the light source is one or more of LEDs, and where the light rays from one or more of the LEDs is/are directed in a first direction and where the light rays from one or more of the LEDs is/are directed in a second direction different from the first direction.

5. A compact lens arrangement according to claim 4, where the light rays are reflected partly by the edge and partly by the surface at the crescent holes, and partly by the inner surface of the light guide.

6. A compact lens arrangement according to claim 5, where the contour of the light guide fully or partly is included into a curved shape in which R1 is bigger than d1.

7. A composite display device including the lens arrangement according to all claims above, where the display device is configured with a top plate and a bottom plate and with the lens arrangement in between the top plate and the bottom plate.

8. A composite display device according to claim 8, where one of or both of the top or the bottom plates are configured with light reflective means, and where one of -, or both of the top or the bottom plates are configured with electrical means.

9. A composite display device according to claim 9, where one of -, or both of the top or the bottom plates are configured with mechanical support means.
